# EUROPÄISCHE PATENTANMELDUNG

(11) **EP 1 101 993 A1**
(43) Veröffentlichungstag der Anmeldung: **23.05.2001**
(21) Anmeldenummer: 00811063.7
(22) Anmeldetag: 10.11.2000
(51) Int. Cl.: F16L 5/02, F16L 5/10

(54) **Verfahren und Vorrichtung zur Spaltabdichtung**

(30) Priorität: 19.11.1999 DE 19955766
(71) Anmelder: HILTI Aktiengesellschaft, 9494 Schaan (LI)
(72) Erfinder: Kögler, Markus, 86807 Buchloe (DE); Heimpel, Franz, 86444 Affing (DE); Huber, Silvia, 86356 Neusäss (DE); Vogel, Peter, 86836 Untermeitingen (DE)
(74) Vertreter: Wildi, Roland

(57) **Zusammenfassung**

Zum Abdichten eines Spalts (4) zwischen einer in einem Bauelement (1) vorhandenen Durchführung (2) und einem die Durchführung (2) durchragenden Gegenstand (3) durch Einbringen eines Abdichtmittels in den Spalt (4) wird im Spalt (4) wenigstens ein Sack (9,10) positioniert, in den das Abdichtmittel eingebracht wird. Zu diesem Zweck wird ein in der Durchführung positionierbares Tragelement (5,6) verwendet, an welchem der Sack (9,10) befestigt ist. Das Abdichten des Spalts (4) kann somit in einfacher und auch flüssigkeitsdichter Weise erfolgen.

## Beschreibung

Die Erfindung betrifft ein Verfahren gemäß dem Oberbegriff des Patentanspruchs 1 zum Abdichten eines Spalts zwischen einer in einem Bauelement vorhandenen Durchführung und einem die Durchführung durchragenden Gegenstand durch Einbringen eines Abdichtmittels in den Spalt, und eine hierzu geeignete Vorrichtung gemäß dem Oberbegriff des Patentanspruchs 9.

Bei der Abdichtung von z.B. Haus einführungen, bei denen etwa Rohre oder Kabel von außen nach innen durch Durchgangsöffnungen in Wänden hindurchgeführt werden, entsteht in der Regel ein Ringspalt zwischen Rohr bzw. Kabel und Wand, der sich auf unterschiedliche Weise abdichten läßt. Zum einen können mechanische Abdichtungen zum Einsatz kommen. Hierbei werden feste Dichtelemente in den Spalt eingeführt und dichten diesen über Formschluß oder elastische Verpressung zum Untergrund ab. Zum anderen können rein chemische Abdichtungen verwendet werden. Hier wird der Ringspalt mit reaktiven chemischen Systemen ausgefüllt, die aushärten und den Ringspalt verschließen. Zum Einsatz kommen anorganische Systeme, etwa Mörtel, oder dergleichen, oder organische Systeme, wie z.B. Dichtmassen, Polymerschäume, usw. Nicht zuletzt können aber auch chemisch - mechanische Abdichtungen benutzt werden. Dabei wird in der Regel eine mechanische Verschalung der stirnseitigen Enden des Ringspalts vorgenommen, wobei die Verschalung ein chemisches Füllsystem aufnimmt.

Mechanische Lösungen sind jedoch teuer, zeit- und arbeitsaufwendig bei der Installation und in der Regel auf bestimmte Rohr-/Kabel- und Wandöffnungsdurchmesser fixiert. Chemische Lösungen, die das Ausfüllen des Ringspalts mit Dichtmassen, Schäumen oder Mörtel betreffen, haben diese Nachteile nicht, gewährleisten jedoch im Allgemeinen keine dauerhafte Abdichtung gegen eintretende Feuchtigkeit bzw. Flüssigkeiten, wie etwa Wasser. Dies liegt zum einen häufig an der Durchlässigkeit des Materials selbst, wenn offenzellige Schäume verwendet werden, sowie an der mangelnden Haftung auf verschiedenen kritischen Untergründen als auch daran, dass der Anwender die verbleibende Durchgangsöffnung nicht vollstänig ausschäumt.

Der Erfindung liegt die Aufgabe zu Grunde, ein Verfahren und eine Vorrichtung der eingangs genannten Art so weiterzubilden, dass ein Spalt der genannten Art unter Verwendung einfacher Mittel möglichst schnell und sicher ausgefüllt bzw. abgedichtet werden kann.

Die verfahrenseitige Lösung der gestellten Aufgabe ist im kennzeichnenden Teil des Patentanspruchs 1 angegeben. Dagegen findet sich die Vorrichtungsseitige Lösung der gestellten Aufgabe im kennzeichnenden Teil des Patentanspruchs 9. Vorteilhafte Ausgestaltungen der Erfindung sind den jeweils nachgeordneten Unteransprüchen zu entnehmen.

Ein Verfahren nach der Erfindung zum Abdichten eines Spaltes zwischen einer in einem Bauelement vorhandenen Durchführung und einem die Durchführung durchragenden Gegenstand durch Einbringen eines Abdichtmittels in den Spalt zeichnet sich dadurch aus, dass im Spalt wenigstens ein Sack positioniert und das Abdichtmittel in den Sack eingebracht wird.

Hierdurch wird erreicht, dass immer genügend Abdichtmittel im Spaltbereich verbleibt, so dass der Spalt vollständig und sicher abgedichtet werden kann. Abdichtmittel kann nicht aus dem Spalt heraustreten, da es hieran durch den Sack gehindert wird. Andererseits ist infolge der Verwendung des Sacks auch keine Verschalung des Ringspaltes nötig, so dass das Abdichten des Spalts schnell und einfach ausgeführt werden kann. Das in den Sack eingebrachte Abdichtmittel presst den Sack gegen den Gegenstand und die Umfangswandung der im Bauelement vorhanden Durchführung, so dass je nach Oberflächenbeschaffenheit dieser Teile die Abdichtung fest im Ringspalt zu liegen kommt. Dabei kann auch eine Dichtheit gegen Eindringen von Feuchtigkeit erzielt werden.

Nach einer sehr vorteilhaften Weiterbildung der Erfindung kann als Sack auch ein poröser Sack verwendet werden, etwa ein aus einem Gewebe bestehenden Sack. Der Sack ist somit ein wenig durchlässig, so dass nach kompletter Verfüllung ein leichter Austritt des Abdichtmittels durch die Maschen des Sacks hindurch möglich ist. Auf diese Weise wird eine noch festere Verbindung zum Untergrund hergestellt, die darüber hinaus auch noch besser gegen Eintritt von Feuchtigkeit bzw. Flüssigkeit abdichtet.

Als Abdichtmittel können z.B. aushärtbare Schaumsysteme verwendet werden. Hier kommen etwa alle baustellenverarbeitbaren Polymerschäume zum Einsatz. Üblicherweise sind dies Polyurethanschäume, die einoder mehrkomponentig sein können. Es kann sich dabei um Kartuschen-wie auch Aerosoldosenschäume handeln, die ein- oder zweikomponentig, bevorzugt jedoch zweikomponentig sind. Desweiteren können für diesen Zweck z.B. aber auch Epoxi- und Silikonschäume verwendet werden. Idealerweise werden quellfähige Schäume verwendet, die auch bei kritischen Untergründen, auf denen keine Haftung erzielt werden kann, Wasserdichtheit zuverlässig herstellen.

Sind die Durchmesser von Durchführung und in der Durchführung liegendem Gegenstand bekannt, so kann auch eine entsprechend vordosierte Menge an Abdichtmittel in einen jeweiligen Sack eingebracht werden. Die Menge an Abdichtmittel kann somit für den benötigten Zweck optimal voreingestellt werden, so dass auf keinen Fall zu wenig Abdichtmittel in den Spalt eingebracht wird, und zu verhindern, dass dieser durchlässig bleibt.

Je nach Form und Größe der Säcke können ein oder mehrere Säcke in Umfangsrichtung des Gegenstandes verteilt im Spalt positioniert werden. Dabei können die Säcke schon vor Einbringen des Gegenstandes in die Durchführung innerhalb der Durchführung angeordnet werden, wonach der Gegenstand dann so in die Durchführung eingebracht wird, dass die Säcke zwischen Gegenstand und Umfangswandung der Durchführung zu liegen kommen. Möglich ist es aber auch, die Säcke erst dann in die Durchführung einzubringen, nachdem bereits der Gegenstand in die Durchführung eingebracht worden ist.

Nach einer anderen vorteilhaften Weiterbildung der Erfindung sind die Säcke jeweils von einem Tragelement gehalten und dadurch im Spalt positionierbar, dass das Tragelement wenigstens zum Teil in die Durchführung hineingeführt wird. Unter Verwendung des Tragelements lässt sich somit der Sack an einem gewünschten Ort innerhalb der Durchführung positionieren, und es wird verhindert, dass Aufgrund der begrenzten Länge des Tragelements der Sack hinten herausfallen kann.

Die Befüllung des Sacks erfolgt über einen am Tragelement verhandenen Einlass, wobei dieser Einlass über einen geeigneten Kanal mit dem Sack verbunden ist.

Dabei kann die Befüllung des Sackes mit Abdichtmittel dadurch erfolgen, dass über den Einlass z.B. ein Polymerschaum aus einem Dispenser oder aus einem Behältnis vorbestimmter Größe in den Sack eingebracht wird. Im zuletzt genannten Fall kann das Behältnis mit dem Tragelement vorrübergehend fest verbunden sein, in welchem sich die vordosierte Menge an Abdichtmittel befindet. Die Übertragung des Abdichtmittels aus dem Behältnis in den Sack kann dann relativ sicher und verschmutzungsfrei erfolgen, da nicht mehr die Gefahr besteht, dass im Bereich des Einlasses Abdichtmittel nach außen austreten kann.

Die erfindungsgemäße Vorrichtung zum Abdichten eines Spalts zwischen einer in einem Bauelement vorhandenen Durchführung und einem die Durchführung durchragenden Gegenstand zeichnet sich, wie bereits erwähnt, dadurch aus, dass sie ein in die Durchführung einsetzbares Tragelement aufweist, an dem wenigstens ein Sack zur Aufnahme eines Abdichtmittels befestigt ist. Die Einheit aus Tragelement und Sack lässt sich somit innerhalb der Durchführung im Spaltbereich positionieren, um dort für eine auch flüssigkeitsdichte Abdichtung zu sorgen.

Nachdem das Tragelement zwischen Gegenstand und Bauelement im Bereich der Durchführung positioniert worden ist, kann der am Tragelement befestigte Sack je nach Ausführungsform der Vorrichtung z.B. zwischen Gegenstand und Bauelement zu liegen kommen oder aber an einer dem Gegenstand abgewandten Oberfläche des Tragelements, also zwischen Tragelement und Bauelement. Im zuerst genannten Fall würde beim Befüllen des Sacks mit Abdichtmittel der Sack den Gegenstand und das Bauelement miteinander verpressen und somit für eine flüssigkeitsdichte Abdichtung sorgen,während für den zuletzt genannten Fall der mit Abdichtmittel befüllte Sack einerseits gegen das Bauelement drückt und andererseits das Tragelement gegen den Gegenstand drückt. Auch in diesem Fall kann für eine flüßigkeitsdichte Abdichtung gesorgt werden, insbesondere auch im Bereich zwischen Tragelement und Gegenstand, wenn beide Teile passend dicht aufeinander liegen oder wenigstens eines dieser Teile aus einem elastischen Material, z.B. aus Kunststoff, besteht.

Das Tragelement selbst kann nach einer Ausgestaltung der Erfindung selbst als Hülse ausgebildet sein und einen in seiner Umfangsrichtung verlaufenden schlauchförmigen Sack tragen. Zu Abdichtszwecken würde in diesem Fall die Hülse zunächst in die Durchführung hineingeführt werden, um anschließend den Gegenstand durch die Hülse hindurchschieben zu können. Danach wird der schlauchförmige Sack mit Abdichtungsmaterial gefüllt. Der Innendurchmesser der Hülse wäre dann an den Außendurchmesser des Gegenstandes angepasst, wenn letzterer etwa ein Rohr oder ein Kabel ist.

Andererseits könnte das Trägerelement auch so ausgebildet sein, dass es nur über ein Teil des Umfangs des Gegenstandes verläuft. Für Rohre oder Kabel würde das bedeuten, dass das Tragelement z.B. auch Halbschalenförmig oder auch Teilkreisschalenförmig ausgebildet sein könnte, wobei der Sack wiederum schlauchförmig in Umfangsrichtung des so ausgestalteten Tragelementes verlaufen würde. Tragelemente dieser Art können dann zum Einsatz kommen, wenn sich bereits Rohre bzw. Kabel in Durchführungen befinden und die entsprechenden Ringspalte im nachhinein abgedichtet werden sollen. Hier werden jetzt die Teil- bzw. Halbschalenförmigen Tragelemente mit entsprechend schlauchartig verlaufendem Sack stirnseitig in den Ringspalt eingeschoben.

Dabei kann in noch weiterer Ausgestaltung der Erfindung das Tragelement einen stirnseitigen Flansch aufweisen, dessen Aussendurchmesser so gewählt ist, dass er den Innendurchmesser der im Bauelement vorhandenen Durchführung überragt. Dadurch ist für eine sichere Positionierung des Tragelements relativ zum Bauelement gesorgt und somit für eine sichere Positionierung des mit dem Tragelement verbundenen Sacks innerhalb des Spalts.

Ein Ausführungsbeispiel der Erfindung wird nachfolgend unter Bezugnahme auf die Zeichnung näher beschrieben. Es zeigen:
Figur 1 einen Zustand, bei dem zwei halbschalenförmig ausgebildete Tragelemente auf einen zylindischen Gegenstand aufgesetzt sind und noch nicht in eine Durchführung eines Bauelements eingeführt wurden;
Figur 2 einen Zustand, bei dem die Tragelemente in die Durchführung hineingeschoben worden sind;
Figur 3 einen Zustand, bei dem mit den Tragelemten verbundene schlauchförmige Säcke mit Abdichtungsmittel befüllt worden sind.

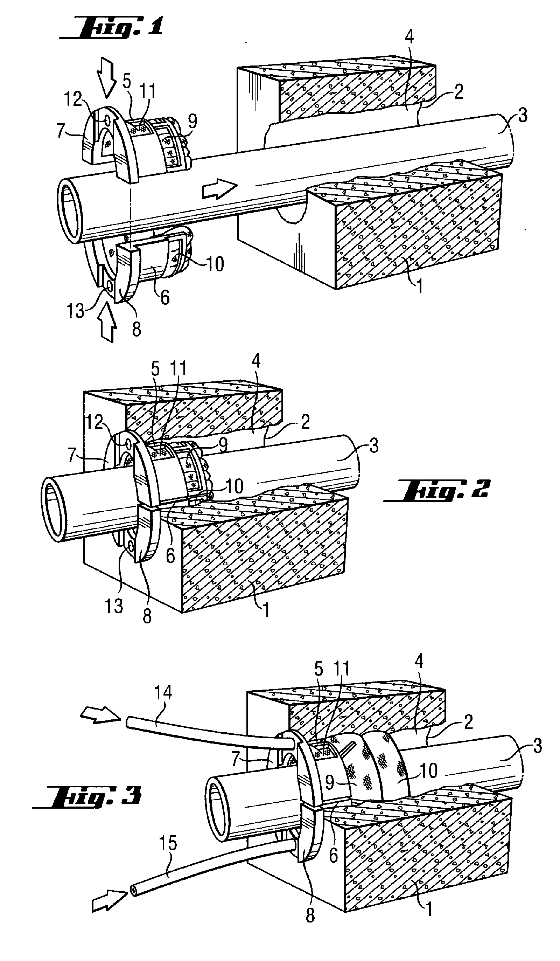

Die Figur 1 zeigt ein Bauelement 1, das etwa die Wand eines Gebäudes sein kann. Innerhalb dieses Bauelements 1 befindet sich eine Durchführung 2 mit einem bekannten Innendurchmesser. Diese Durchführung 2 ist mehr oder weniger hohlzylindrisch. Durch die Durchführung 2 läuft ein zylindrischer Gegenstand 3 hindurch, etwa ein Kabel oder Rohr. Dabei kommt zwischen der Innenwandung der Durchführung 2 und dem Gegenstand 3 ein Ringspalt 4 zu liegen.

Wie insbesondere in Figur 1 zu erkennen ist, werden zunächst zur Abdichtung des Ringspalts 4 zwei halbschalenförmig ausgebildete Tragelemente 5 und 6 radial auf den Gegenstand 3 aufgesetzt. Die Tragelemente 5 und 6 weisen einen Innendurchmesser auf, der dem Außendurchmesser des Gegenstands 3 entspricht. Ihre Wandstärke ist so gewählt, dass sie leicht in die Durchführung 2 in Axialrichtung des Gegenstands 3 hineingeschoben werden können. An ihrem vorderen und freien Ende weisen die Tragelemente 5 und 6 jeweils einen nach außen stehenden Flansch bzw. Umfangsflansch 7, 8 auf, die ein zu weites Hineinschieben der Tragelemente 5, 6 in die Durchführung 2 verhindern und zu diesem Zweck mit ihrer Innenseite gegen das Bauelement 1 schlagen. Sind die Tragelemente 5 und 6 auf den Gegenstand 3 vollständig aufgesetzt, stehen sie an ihren Längsseiten im wesentlichen miteinander in Kontakt.

Jedes der Tragelemente 5 und 6 trägt an seiner dem Flansch 7 bzw. 8 gegenüberliegenden Stirnseite einen porösen Gewebesack 9 bzw. 10. Die Gewebesäcke 9, 10 sind zunächst zusammengefaltet und befinden sich in diesem Zustand auf der dem Gegenstand abgewandten Fläche der Tragelemente 5 und 6. Die Gewebesäcke selbst sind schlauchförmig ausgebildet, an ihren Enden verschlossen und verlaufen in Unfangsrichtung der Tragelemente 5, 6. Jeder der Gewebesäcke 9, 10 ist über einen z.B. Schlauchkanal 11 mit einem Einlass 12, 13 verbunden, der sich an der freien Stirnseite des jeweiligen Tragelementes 5, 6 befindet. Über diesen Einlass 12, 13 wird z.B. ein aushärtbarer Schaum durch den jeweiligen Schlauchkanal 11 dem jeweiligen Sack 9, 10 zugeführt.

Die Figur 2 zeigt einen Zustand, bei dem beide Tragelemente 5, 6 in die Durchführung 2 hineingeschoben worden sind. Sie liegen passend bzw. eng auf dem Gegenstand 3 auf, wobei die Flansche 7, 8 gegen das Bauelement 1 schlagen und damit die Position der Tragelemente 5,6 relativ zum Bauelement 1 festlegen. Entsprechendes gilt für die Gewebesäcke 9, 10, da sie fest mit den jeweiligen Tragelementen 5, 6 verbunden sind. Sie befinden sich jetzt ebenfalls im Inneren der Durchführung 2.

Wie in nachfolgender Figur 3 zu erkennen ist, sind nunmehr die Gewebesäcke 9, 10 mit Abdichtmittel befüllt worden. Hierzu wurden die Einlässe 12, 13 in Figur 2 mit Zuleitungskanälen 14, 15 verbunden, um über sie Abdichtmittel zuführen zu können. Dabei wurde Abdichtmittel in einer so großen Menge zugeführt, etwa ein aushärtbarer Polymerschaum, oder dergleichen, dass sich die Schlauchsäcke 9, 10 entfalten konnten. Sie kommen jetzt zum Teil oberhalb der jeweiligen Tragelementen 5, 6, aber zum Teil auch direkt auf dem Gegenstand 3 zu liegen. Die Befüllung der Gewebesäcke 9, 10 mit Abdichtmittel erfolgt in einem solchen Maße, dass die Gewebesäcke 9, 10 fest gegen die Umfangswand der Durchführung 2 drücken und andererseits fest gegen den Gegenstand 3 bzw. die Tragelemente 5, 6, um letztere ebenfalls noch gegen den Gegenstand 3 pressen zu können. Auf diese Weise wird eine gut feuchtigkeitsdichte Abdichtung im Ringspalt 4 erhalten. Tritt Abdichtmaterial zu einem gewissen Teil noch aus den Gewebesäcken 9, 10 aus, so erfolgt außerdem noch eine Verklebung mit den Elementen 1, 3, 5, 6, was zu einem noch besseren Sitz und zu noch besseren Dichtungseigenschaften der Abdichtung im Ringspalt 4 führt. Die Gewebesäcke 9, 10 können sich in Längsrichtung der Durchführung 2 so weit in Richtung zum freien Ende der Tragelemente 5, 6 entfalten, dass auch ein wesentlicher Teil der Durchführung 2 durch das Abdichtmittel ausgefüllt werden kann.

Bei einem beispielsweisen Ausführungsfall wurde ein mit einer Hülse verbundener und rundumlaufender Gewebesack mit einem Zweikomponenten-PUR-Aerosoldosenschaum ausgeschäumt. Verwendet wurde eine Probebohrung in Beton mit einem Innendurchmesser von 100mm, durch die ein PE-Rohr mit einem Außendurchmesser von 40mm hindurchgeführt wurde. Der verbleibende Ringspalt wurde auf diese Weise vollständig und flüssigkeitsdicht verfüllt.

## Patentansprüche

1. Verfahren zum Abdichten eines Spalts (4) zwischen einer in einem Bauelement (1) vorhandenen Durchführung (2) und einem die Durchführung (2) durchragenden Gegenstand (3) durch Einbringen eines Abdichtmittels in den Spalt (4), **dadurch gekennzeichnet,** daß im Spalt (4) wenigstens ein Sack (9, 10) positioniert und das Abdichtmittel in den Sack (9, 10) eingebracht wird.

2. Verfahren nach Anspruch 1, **dadurch gekennzeichnet,** daß mehrere Säcke (9, 10) in Umfangsrichtung des Gegenstandes (3)verteilt im Spalt (4) positioniert werden.

3. Verfahren nach Anspruch 1 oder 2, **dadurch gekennzeichnet,** daß die Säcke (9, 10) jeweils von einem Tragelement (5, 6) gehalten und dadurch im Spalt (4) positioniert werden, daß das Tragelement (5, 6) wenigstens zum Teil in die Durchführung (2) hineingeführt wird.

4. Verfahren nach Anspruch 3, **dadurch gekennzeichnet,** daß zunächst das Tragelement (5, 6) in der Durchführung (2) positioniert und dann der Gegenstand (3) in die Durchführung (2) hineingeschoben wird.

5. Verfahren nach Anspruch 3 oder 4, **dadurch gekennzeichnet,** daß die Befüllung der Säcke (9, 10) mit Abdichtmittel über Einlässe (12, 13) im Tragelement (5, 6) hindurch erfolgt.

6. Verfahren nach einem der Ansprüche 1 bis 5, **dadurch gekennzeichnet,** daß eine vordosierte Menge an Abdichtmittel in einen jeweiligen Sack (9, 10) eingebracht wird.

7. Verfahren nach einem der Ansprüche 1 bis 6, **dadurch gekennzeichnet,** daß als Abdichtmittel ein aushärtbarer Schaum verwendet wird.

8. Verfahren nach einem der Ansprüche 1 bis 7, **dadurch gekennzeichnet,** daß als Sack (9, 10) ein poröser Sack verwendet wird.

9. Vorrichtung zum Abdichten eines Spalts (4) zwischen einer in einem Bauelement (1) vorhandenen Durchführung (2) und einem die Durchführung (2) durchragenden Gegenstand (3), **gekennzeichnet durch** ein in die Durchführung (2) einsetzbares Tragelement (5, 6), an dem wenigstens ein Sack (9, 10) zur Aufnahme eines Abdichtmittels befestigt ist.

10. Vorrichtung nach Anspruch 9, **dadurch gekennzeichnet,** daß das Tragelement (5, 6) passend auf die Umfangsoberfläche des in der Durchführung (2) liegenden Gegenstandes (3) aufsetzbar ist.

11. Vorrichtung nach Anspruch 10, **dadurch gekennzeichnet,** daß das Tragelement (5, 6) nur über einen Teil des Umfangs des Gegenstandes (3) verläuft.

12. Vorrichtung nach einem der Ansprüch 8 bis 11, **dadurch gekennzeichnet,** daß der Sack (9, 10) an einer dem Gegenstand (3) abgewandten Oberfläche des Tragelements (5, 6) an diesem befestigt ist.

13. Vorrichtung nach Anspruch 12, **dadurch gekennzeichnet,** daß der Sack (9,10) schlauchförmig ausgebildet ist und sich mit seiner Längssicht in Umfansrichtung des Gegenstandes (3) erstreckt.

14. Vorrichtung nach einem der Ansprüch 9 bis 13, **dadurch gekennzeichnet,** daß der Sack (9, 10) aus einem Gewebe besteht.

15. Vorrichtung nach einem der Ansprüch 9 bis 14, **dadurch gekennzeichnet,** daß der Sack (9, 10) porös ist.

16. Vorrichtung nach einem der Ansprüch 9 bis 15, **dadurch gekennzeichnet,** daß der Sack (9, 10) über einen Einlass (12, 13) im Tragelement (5, 6) hindurch befüllbar ist.

17. Vorrichtung nach einem der Ansprüch 9 bis 16, **dadurch gekennzeichnet,** daß das Tragelement (5, 6) einen die im Bauelement (1) vorhandene Durchführung (2) überragenden Flansch (7, 8) aufweist.

18. Vorrichtung nach einem der Ansprüche 16 oder 17, **dadurch gekennzeichnet,** daß mit dem Tragelement (5, 6) ein Behältnis vorübergehend fest verbindbar ist, in welchem sich eine vordosierte Menge an Abdichtmittel befindet, um das Abdichtmittel dem Sack (9, 10) über den Einlass (12, 13) des Tragelement (5, 6) zuführen zu können.
